# EUROPEAN PATENT APPLICATION

(11) **EP 4 651 512 A1**
(43) Date of publication of application: **19.11.2025**
(21) Application number: 24844290.7
(22) Date of filing: 22.04.2024
(51) Int. Cl.: H04Q 11/00, H04B 10/038, H04B 10/079

(54) **LINK SWITCHING METHOD AND SYSTEM, AND ELECTRONIC DEVICE AND STORAGE MEDIUM**

(30) Priority: 24.07.2023 CN 202310916016
(71) Applicant: Ruijie Networks Co., Ltd., Fuzhou, Fujian 350002 (CN)
(72) Inventor: XIE, Haiyang, Fuzhou, Fujian 350002 (CN)
(74) Representative: Boult Wade Tennant LLP
(86) International application number: PCT/CN2024/089177
(87) International publication number: WO 2025/020594

(57) **Abstract**

Embodiments of this application provide a link switching method and system, an electronic device, and a storage medium. The method includes: determining a failure status of a first link; when it is determined that the first link fails, determining whether a second link fails; and when the second link does not fail, switching from the first link to the second link for data transmission.

## Description

### CROSS-REFERENCE TO RELATED APPLICATIONS

This application claims priority to Chinese Patent Application No. 202310916016.6, filed with the China National Intellectual Property Administration on July 24, 2023 and entitled "LINK SWITCHING METHOD AND APPARATUS, AND ELECTRONIC DEVICE", which is incorporated herein by reference in its entirety.

### TECHNICAL FIELD

This application relates to the field of communication technologies, and in particular, to a link switching method and system, an electronic device, and a storage medium.

### BACKGROUND

To provide a "gigabit" or "10-gigabit" network with higher bandwidth and easy operation and maintenance for an enterprise campus, an Ethernet passive aggregation network architecture is introduced.

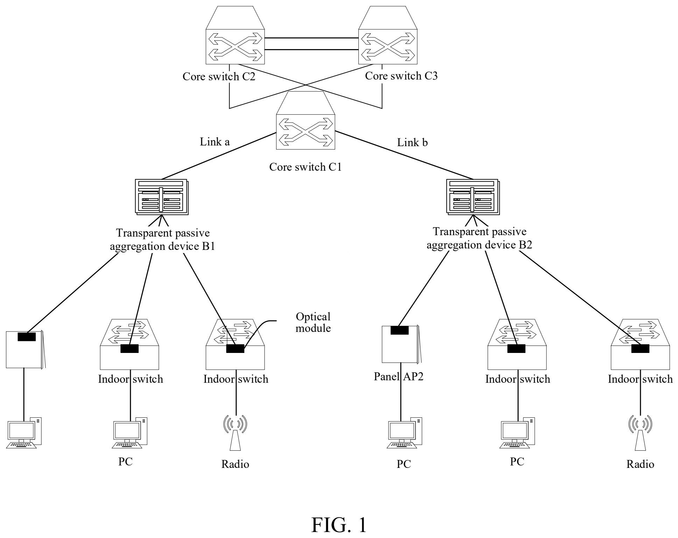

FIG. 1 is a schematic diagram of an Ethernet passive aggregation network architecture in the related art. As shown in FIG. 1, a transparent passive aggregation device is used to enable an access device (for example, an indoor switch) in a local area network to access a core switch through the transparent passive aggregation device, to implement data transmission of to-be-transmitted data from the core switch to the access device.

### SUMMARY

Exemplary embodiments of this application provide a link switching method and system, an electronic device, and a storage medium.

According to a first aspect, this application provides a link switching method. The method includes:
determining a failure status of a first link, where the first link is a link between an optical splitter and a first transmit end;
when it is determined that the first link fails, determining a failure status of a second link, where the second link is a link between the optical splitter and a second transmit end; and
when it is determined that the second link does not fail, switching from the first link to the second link for data transmission, where
the optical splitter is configured to receive a first optical signal sent by a multiplexer, split the first optical signal into a first branch optical signal and a second branch optical signal, send the first branch optical signal to the first transmit end, and send the second branch optical signal to the second transmit end, where the first branch optical signal is used to detect the failure status of the first link, and the second branch optical signal is used to detect the failure status of the second link.

The failure status herein is mainly used to indicate whether the first link and the second link fail. In the foregoing method, when the first link fails and the second link does not fail, the first link is switched to the second link for data transmission. This resolves a problem that data transmission efficiency is affected due to a need to wait for recovery of a failed link.

In a possible implementation, the determining a failure status of a first link includes: obtaining an interval duration in which the first branch optical signal is not transmitted in the first link, and when the interval duration exceeds a preset duration, determining that the first link fails.

In a possible implementation, the determining a failure status of a first link includes: obtaining third optical power corresponding to the first branch optical signal transmitted by the first link, and when the third optical power is beyond a third preset optical power range, determining that the first link fails.

In a possible implementation, the determining a failure status of a first link includes:
detecting an interval duration in which the first branch optical signal is not transmitted in the first link;
when the interval duration does not exceed a preset duration, obtaining third optical power corresponding to the first branch optical signal transmitted by the first link; and
when the third optical power is beyond a third preset optical power range, determining that the first link fails.

In the foregoing method, the determination based on the interval duration and first optical power, whether preset conditions are met to jointly determine a link failure status, adopts the dual determining, thereby improving accuracy of a determining result.

The embodiments of this application provide a plurality of manners of determining the failure status of the first link, so that a method for determining that the first link fails is applicable to more service scenarios.

In a possible implementation, before the determining a failure status of a first link, the method further includes: controlling a transmit function of the first transmit end and a receive function of the first transmit end to be enabled, and controlling a transmit function of the second transmit end to be disabled and a receive function of the second transmit end to be enabled.

In the foregoing method, the first transmit end is in a normal operating state, and the second transmit end is in a standby state. This ensures that the second transmit end can monitor, in a timely manner, information sent by the first transmit end, and switch from the first link to the second link based on a notification of the first transmit end.

In a possible implementation, the determining whether a second link fails includes: obtaining a failure status, detected by the second transmit end, of the second link.

In the foregoing method, the failure status of the second link may be obtained in a timely manner, so that switching from the first link to the second link is performed only when it is determined that the second link can normally perform communication.

In a possible implementation, the switching from the first link to the second link for data transmission includes: controlling a transmit function of the first transmit end to be disabled and a receive function of the first transmit end to be enabled, and controlling a transmit function of the second transmit end and a receive function of the second transmit end to be enabled.

In the foregoing method, in an Ethernet passive aggregation network architecture, after link switching is performed, the second transmit end is in a normal operating state, and the first transmit end is in a standby state, so that normal communication of the second link is ensured.

According to a second aspect, this application provides a link switching apparatus. The apparatus includes:
a first determining module, configured to determine a failure status of a first link, where the first link is a link between an optical splitter and a first transmit end;
a second determining module, configured to: when it is determined that the first link fails, determine a failure status of a second link, where the second link is a link between the optical splitter and a second transmit end; and
a switching module, configured to: when it is determined that the second link does not fail, switch from the first link to the second link for data transmission, where
the optical splitter is configured to receive a first optical signal sent by a multiplexer, split the first optical signal into a first branch optical signal and a second branch optical signal, send the first branch optical signal to the first transmit end, and send the second branch optical signal to the second transmit end, where the first branch optical signal is used to detect the failure status of the first link, and the second branch optical signal is used to detect the failure status of the second link.

The failure status herein is mainly used to indicate whether the first link and the second link fail.

In a possible implementation, the first determining module is configured to obtain an interval duration in which the first branch optical signal is not transmitted in the first link, and when the interval duration exceeds a preset duration, determine that the first link fails.

In a possible implementation, the first determining module is configured to obtain third optical power corresponding to the first branch optical signal transmitted by the first link, and when the third optical power is beyond a third preset optical power range, determine that the first link fails.

In a possible implementation, the first determining module is configured to: obtain an interval duration in which the first branch optical signal is not transmitted in the first link; when the interval duration does not exceed a preset duration, obtain third optical power corresponding to the first branch optical signal transmitted by the first link; and when the third optical power is beyond a third preset optical power range, determine that the first link fails.

In a possible implementation, the first determining module is further configured to: before determining the failure status of the first link, control a transmit function of the first transmit end and a receive function of the first transmit end to be enabled, and control a transmit function of the second transmit end to be disabled and a receive function of the second transmit end to be enabled.

In a possible implementation, the second determining module is configured to obtain a failure status, detected by the second transmit end, of the second link.

In a possible implementation, the switching module is configured to control a transmit function of the first transmit end to be disabled and a receive function of the first transmit end to be enabled, and control a transmit function of the second transmit end and a receive function of the second transmit end to be enabled.

According to a third aspect, this application provides a communication device, including a multiplexer and an optical splitter, where
the multiplexer is configured to receive a third optical signal sent by a first receive end and a fourth optical signal sent by a second receive end, couple the third optical signal and the fourth optical signal into a first optical signal, and send the first optical signal to the optical splitter;
the optical splitter is configured to receive the first optical signal, split the first optical signal into a first branch optical signal and a second branch optical signal, send the first branch optical signal to a first transmit end, and send the second branch optical signal to a second transmit end, where a link between the first transmit end and the optical splitter is a first link, a link between the second transmit end and the optical splitter is a second link, the first branch optical signal is used to detect a failure status of the first link, and the second branch optical signal is used to detect a failure status of the second link; and
the optical splitter is further configured to: when the first link is switched to the second link for data transmission based on the failure status of the first link and the failure status of the second link, receive a fifth optical signal sent by the second transmit end.

In a possible implementation, the communication device further includes a demultiplexer, where
the optical splitter is configured to send the fifth optical signal to the demultiplexer; and
the demultiplexer is configured to receive the fifth optical signal, decouple the fifth optical signal into a sixth optical signal and a seventh optical signal, send the sixth optical signal to the first receive end, and send the seventh optical signal to the second receive end.

According to a fourth aspect, this application provides a link switching system. The system includes an optical splitter, a multiplexer, a first transmit end, a second transmit end, a first receive end, and a second receive end, where
the first receive end is configured to send a third optical signal to the multiplexer;
the second receive end is configured to send a fourth optical signal to the multiplexer;
the multiplexer is configured to receive the third optical signal and the fourth optical signal, couple the third optical signal and the fourth optical signal into a first optical signal, and send the first optical signal to the optical splitter;
the optical splitter is configured to receive the first optical signal, split the first optical signal into a first branch optical signal and a second branch optical signal, send the first branch optical signal to the first transmit end, and send the second branch optical signal to the second transmit end, where a link between the first transmit end and the optical splitter is a first link, and a link between the second transmit end and the optical splitter is a second link;
the first transmit end is configured to: receive the first branch optical signal, where the first branch optical signal is used to detect a failure status of the first link; and when it is determined that the first link fails and the second link does not fail, control the first link to switch to the second link for data transmission; and
the second transmit end is configured to receive the second branch optical signal, where the second branch optical signal is used to detect a failure status of the second link.

In a possible implementation, the link switching system further includes a demultiplexer, where
the optical splitter is configured to: when the first link is switched to the second link for data transmission, receive a fifth optical signal sent by the second transmit end, and send the fifth optical signal to the demultiplexer; and
the demultiplexer is configured to receive the fifth optical signal, decouple the fifth optical signal into a sixth optical signal and a seventh optical signal, send the sixth optical signal to the first receive end, and send the seventh optical signal to the second receive end.

In a possible implementation, before controlling the first link to switch to the second link for data transmission, the first transmit end is configured to obtain an interval duration in which the first branch optical signal is not transmitted in the first link, and when the interval duration exceeds a preset duration, determine that the first link fails.

In a possible implementation, before controlling the first link to switch to the second link for data transmission, the first transmit end is configured to obtain third optical power corresponding to the first branch optical signal transmitted by the first link, and when the third optical power is beyond a third preset optical power range, determine that the first link fails.

In a possible implementation, before controlling the first link to switch to the second link for data transmission, the first transmit end is configured to: obtain an interval duration in which the first branch optical signal is not transmitted in the first link; when the interval duration does not exceed a preset duration, obtain third optical power corresponding to the first branch optical signal transmitted by the first link; and when the third optical power is beyond a third preset optical power range, determine that the first link fails.

In a possible implementation, before controlling the first link to switch to the second link for data transmission, the first transmit end is configured to enable a transmit function and a receive function, and the second transmit end is configured to disable a transmit function and enable a receive function.

In a possible implementation, before controlling the first link to switch to the second link for data transmission, the first transmit end is configured to obtain a failure status, detected by the second transmit end, of the second link.

In a possible implementation, when it is determined that the first link fails and the second link is normal, the first transmit end is configured to disable a transmit function and enable a receive function, and the second transmit end is configured to enable a transmit function and a receive function.

According to a fifth aspect, this application provides an electronic device, including:
a memory, configured to store a computer program; and
a processor, configured to execute the computer program stored in the memory, to implement the steps of the foregoing link switching method.

According to a sixth aspect, a computer-readable storage medium is provided, where a computer program is stored in the computer-readable storage medium, and when the computer program is executed by a processor, the steps of the foregoing link switching method are implemented.

For any one of the first aspect to the sixth aspect and technical effects that can be achieved in the aspects, refer to descriptions of technical effects that can be achieved in the first aspect or various possible solutions in the first aspect. Details are not described herein again.

### BRIEF DESCRIPTION OF DRAWINGS

To describe the technical solutions in the embodiments of the present invention or in the related art more clearly, the following briefly describes the accompanying drawings required for describing the embodiments. Apparently, the accompanying drawings in the following description show merely some of the embodiments of this application, and a person of ordinary skill in the art may still derive other drawings of embodiments from these accompanying drawings without creative efforts.
FIG. 1 is a schematic diagram of an Ethernet passive aggregation network architecture according to an embodiment of this application;
FIG. 2 is a flowchart of a link switching method according to an embodiment of this application;
FIG. 3 is a schematic diagram of an Ethernet passive aggregation network architecture according to another embodiment of this application;
FIG. 4 is a schematic diagram of a PON network architecture according to an embodiment of this application;
FIG. 5 is a schematic diagram of a PON network architecture according to another embodiment of this application;
FIG. 6 is a schematic diagram of an Ethernet passive aggregation network architecture according to still another embodiment of this application;
FIG. 7 is a schematic diagram of a transparent passive aggregation apparatus according to an embodiment of this application;
FIG. 8 is a schematic diagram of a link switching system according to an embodiment of this application;
FIG. 9 is a schematic diagram of a structure of a link switching apparatus according to an embodiment of this application; and
FIG. 10 is a schematic diagram of a structure of an electronic device according to an embodiment of this application.

### DESCRIPTION OF EMBODIMENTS

To make the objectives, technical solutions, and advantages of this application clearer, the following further describes this application in detail with reference to the accompanying drawings. A specific operation method in a method embodiment may also be used in an apparatus embodiment or a system embodiment. It should be noted that "a plurality of" in the descriptions of this application is understood as "at least two". The term "and/or" describes an association relationship between associated objects and represents that three relationships may exist. For example, A and/or B may represent the following three cases: Only A exists, both A and B exist, and only B exists. A connection between A and B may represent two cases: A is directly connected to B, and A is connected to B through C. In addition, in the descriptions of this application, the terms "first", "second", and the like are used only for distinguishing descriptions, but cannot be understood as an indication or implication of relative importance, or as an indication or implication of a sequence.

In related art, as shown in FIG. 1, a core switch C1 is connected to a transparent passive aggregation device B1 through a link a, and the core switch C1 is connected to a transparent passive aggregation device B2 through a link b. When the link a or the link b fails, an access device corresponding to an access side of the failed link operates abnormally. If the access device needs to be recovered to a normal operating state, it is necessary to wait for the failed link to recover. Therefore, in an Ethernet passive aggregation network architecture, how to recover a failed link becomes a major problem that needs to be resolved.

To resolve the problem described above, the embodiments of this application provide a link switching method, to implement link multiplexing between a core switch and a transparent passive aggregation device. In this way, when there is a failed link, the failed link can be switched to a normal link in a timely manner. The method and the apparatus in the embodiments of this application are based on a same technical concept. Because principles for resolving a problem by using the method and the apparatus are similar, mutual reference may be made between embodiments of the apparatus and embodiments of the method, and repeated descriptions are omitted.

The following describes the embodiments of this application in detail with reference to the accompanying drawings.

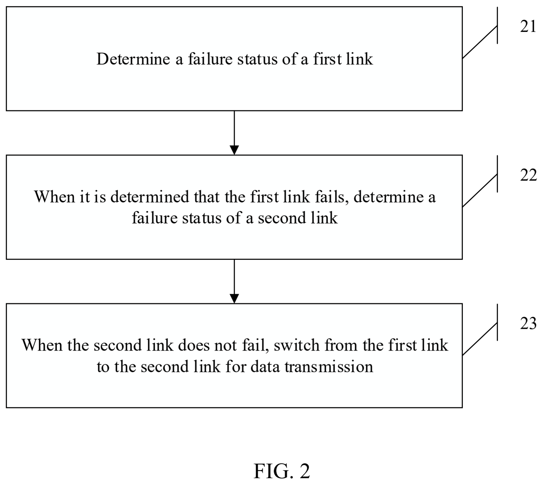

An embodiment of this application provides a link switching method. The method may be used to resolve a link switching problem in an Ethernet passive aggregation architecture. The method may be implemented by a first receive end or a second receive end. FIG. 2 is a flowchart of a link switching method according to an embodiment of this application. As shown in FIG. 2, the method includes the following steps.

Step S21: Determine a failure status of a first link, where the first link is a link between an optical splitter and a first transmit end, and the failure status herein is mainly used to indicate whether the first link fails.

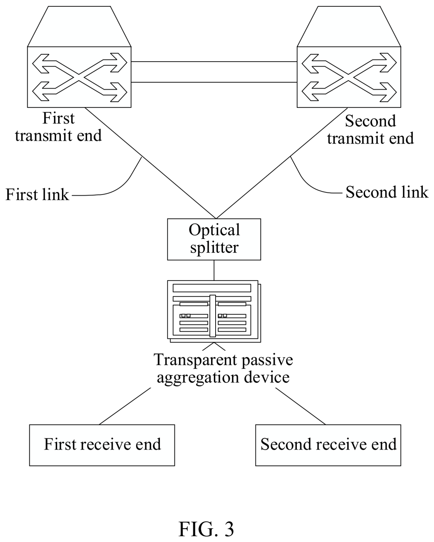

FIG. 3 is a schematic diagram of another Ethernet passive aggregation network architecture according to an embodiment of this application. As shown in FIG. 3, in this embodiment of this application, data transmission may be implemented based on a wavelength division multiplexing mechanism, for example, coarse wavelength division multiplexing (CWDM), by using the Ethernet passive aggregation network architecture. In FIG. 3, a first receive end and a second receive end may be access switches. Devices such as a PC, a wireless access terminal, and a smartphone are connected to a transparent passive aggregation device through the access switches. The transparent passive aggregation device may include a multiplexer and a demultiplexer. Types of the multiplexer and the demultiplexer may be selected according to actual requirements, and may be but are not limited to coarse wavelength division multiplexing (CWDM) devices, dense wavelength division multiplexing (DWDM) devices, or multi-wavelength division multiplexing (MWDM) devices. A first transmit end and a second transmit end may be core switches. The first receive end, the second receive end, the first transmit end, and the second transmit end each are provided with an optical module for conversion between an optical signal and an electrical signal.

In this embodiment of this application, to further implement link switching, an optical splitter may be disposed between the first transmit end and the transparent passive aggregation device, and the optical splitter is also disposed between the second transmit end and the transparent passive aggregation device. A link between the optical splitter and the first transmit end is a first link, and a link between the optical splitter and the second transmit end is a second link. The optical splitter is configured to receive a first optical signal sent by the first receive end or the second receive end through the transparent passive aggregation device, and split the first optical signal into a first branch optical signal and a second branch optical signal. The first branch optical signal corresponds to the first link, and the second branch optical signal corresponds to the second link.

The optical splitter may be a 1:2 optical splitter for implementing signal split. The 1:2 optical splitter can divide an input optical signal into two output optical signals in equal proportion, and the two output optical signals are transmitted in two different channels.

In this embodiment of this application, the Ethernet passive aggregation network architecture supports a peer-to-peer (P2P) protocol. In P2P, a transmit (TX) function of the second transmit end corresponding to the second link needs to be disabled. If TX functions are enabled for both the first transmit end corresponding to the first link and the second transmit end corresponding to the second link, signal interference occurs.

After the first transmit end and the second transmit end are connected to a power supply, the first transmit end needs to enable a TX function and a receive (RX) function of an optical module of the first transmit end, to enable the first transmit end to remain in a normal operating state. The first transmit end sends a second optical signal in response to the first branch optical signal. In addition, the second transmit end needs to disable a TX transmit function of an optical module of the second transmit end so that the second transmit end cannot send a signal, but keep an RX function of the second transmit end enabled so that the second transmit end can receive an optical signal. In this case, the second transmit end is in a standby state. In the standby state, the second transmit end can only receive a signal, but cannot send a signal. The second transmit end can receive, in a timely manner, a link switching message sent by the first transmit end, so that switching between the first link and the second link can be successfully completed.

To ensure switching between different links, a receive end needs to detect a failure status of the first link, and then determine, based on the failure status of the first link, whether the first link needs to be switched.

In a possible implementation, to detect the failure status of the first link, the receive end may detect, based on a preset periodicity, an interval duration in which the second optical signal is not transmitted in the first link, and determine whether the interval duration is greater than a preset duration. If the interval duration is greater than the preset duration, the receive end may determine that the second optical signal is lost, and therefore determines that the first link fails. If the interval duration is less than or equal to the preset duration, the receive end may determine that the second optical signal is normally received, and therefore determines that the first link does not fail, in other words, is in a normal state.

In a possible implementation, the receive end detects first optical power corresponding to the second optical signal transmitted by the first transmit end in the first link, and determines whether the first optical power falls within a first preset optical power range. The first optical power falling within the first preset optical power range indicates that the second optical signal corresponding to the first optical power is in a normal state, and in this case, it is determined that the first link is normal. When the first optical power is beyond the first preset optical power range, it is determined that the first link fails. The first optical power being less than minimum optical power within the first preset optical power range indicates that strength of the second optical signal is weak, and there is a risk that a communication service is to be blocked. The first optical power being greater than maximum optical power within the first preset optical power range indicates that the second optical signal is excessively strong, and consequently, a service duration of the optical module is shortened.

In a possible implementation, the receive end detects, based on a preset periodicity, an interval duration in which the second optical signal is not transmitted in the first link, and determines whether the interval duration is greater than a preset duration. When the interval duration does not exceed the preset duration, the receive end determines that an optical signal is received. The receive end further determines first optical power corresponding to the second optical signal in the first link, and determines whether the first optical power falls within a first preset optical power range. The first optical power falling within the first preset optical power range indicates that the second optical signal corresponding to the first optical power is normal, and in this case, it is determined that the first link is normal. The first optical power being beyond the first preset optical power range indicates that the second optical signal corresponding to the first optical power is abnormal, and in this case, it is determined that the first link fails. The first optical power being less than minimum optical power within the first preset optical power range indicates that strength of the second optical signal is weak, and there is a risk that a communication service is to be blocked. The first optical power being greater than maximum optical power within the first preset optical power range indicates that the second optical signal is excessively strong, and consequently, a service duration of the optical module is shortened.

The receive end may select, based on an actual scenario, any one of the three manners described above to determine a detection result. This can adapt to more actual scenarios, provide convenience for the receive end to obtain the detection result, and ensure accuracy of the obtained detection result. It should be noted that there may be other manners of detecting an operating status of the first link, and the foregoing three manners are merely examples and do not constitute a limitation on implementations of this application. All obvious variations made by a person skilled in the art based on the foregoing manners fall within the protection scope of this application.

Step S22: When it is determined that the first link fails, determine a failure status of a second link, where the second link is a link between the optical splitter and a second transmit end. The failure status herein is substantially used to indicate whether the second link fails.

The Ethernet passive aggregation network architecture supports the peer-to-peer protocol. To avoid signal interference, the TX function of the second transmit end is disabled, but the RX function of the second transmit end is kept in an enabled state. The second transmit end may receive, in real time, the second branch optical signal sent by the receive end. To ensure that the first link can be successfully switched to the second link and enable the second link to perform communication normally after the switching, after the receive end determines that the first link fails, the second transmit end determines second optical power corresponding to the second branch optical signal, and then detects whether the second optical power falls within a second preset optical power range. When the second optical power falls within the second preset optical power range, it can be determined that the second link is normal. When the second optical power is beyond the second preset optical power range, it can be determined that the second link is abnormal. The first transmit end reads, in real time, a result detected by the second transmit end and indicating that the second link is normal or abnormal, and sends the detection result to the receive end. It should be noted that the second transmit end may alternatively determine a status of the second link by detecting an interval duration in which the second branch optical signal is not transmitted in the second link. All obvious variations made by a person skilled in the art based on the foregoing manners fall within the protection scope of this application.

After the status of the second link is determined by using the method described above, when the second link is in a normal state, the receive end indicates the first transmit end to switch from the first link to the second link, and data transmission is to be performed in the second link.

Step S23: When it is determined that the second link does not fail, switch from the first link to the second link for data transmission.

In a possible implementation, the TX function of the first transmit end is disabled, the RX function of the first transmit end is enabled, and the TX function and the RX function of the second transmit end are enabled, so that the first link can be switched to the second link, and then data can be normally transmitted in the second link.

Based on the foregoing method, in the Ethernet passive aggregation network architecture, link multiplexing is implemented through the optical splitter. To be specific, the first link serves as a primary link for communication, and the second link serves as a secondary link. In addition, failure statuses of the first link and the second link are monitored. When it is detected that the first link fails and the second link is in the normal state, the first link is directly switched to the second link for data transmission, to resolve a problem in the related art that data transmission efficiency is affected due to a need to passively wait for a failed link to recover.

In a possible implementation, to implement efficient transmission of to-be-transmitted data in the second link, full-power bandwidth may be configured for the second link. The full-power bandwidth is maximum bandwidth that can be enabled in the second link. As shown in FIG. 3, for example, maximum bandwidth between the first transmit end and the receive end is 8G. After the first link is switched to the second link, maximum bandwidth of 8G may be enabled for the second link. Certainly, in an actual application scenario, if the maximum bandwidth cannot be allocated to the second link, bandwidth less than the maximum bandwidth may alternatively be allocated to the second link.

In a possible implementation, the full-power bandwidth may be configured for the second link, to implement high-bandwidth transmission in the Ethernet passive aggregation network architecture.

In addition, in the Ethernet passive aggregation network architecture in this embodiment of this application, the WDM mechanism is used. Therefore, compared with a PON network architecture in a conventional network architecture, bandwidth allocated by a core device to an access device is not reduced. However, in the PON network architecture, bandwidth allocated by a core device to an access device is reduced.

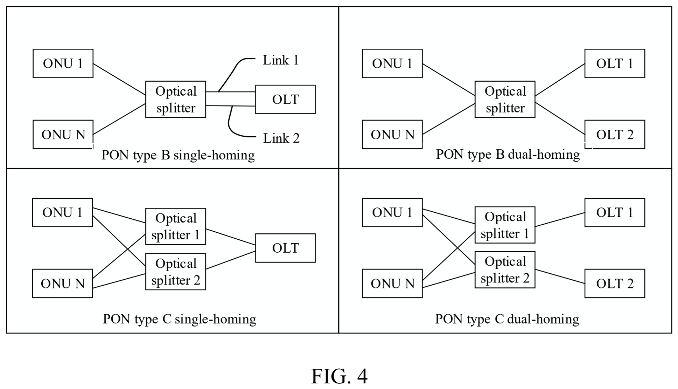

FIG. 4 is a schematic diagram of a PON network architecture in the related art. As shown in FIG. 4, the PON network architecture includes an optical line terminal (OLT), an optical network unit (ONU), and an optical distribution network (ODN, also referred to as an optical splitter). To ensure reliability of PON network architecture, two technical solutions are introduced: PON type single-homing and PON type dual-homing. As shown in FIG. 4, when the PON network includes only one OLT, a network connection mode in this case is referred to as a PON single-homing connection. When the PON network includes two OLTs, a network connection mode in this case is referred to as a PON dual-homing connection.

In the PON single-homing connection scenario, when the PON single-homing connection is a PON type B single-homing connection, two links exist between one optical splitter and one OLT. When the PON single-homing connection is a PON type C single-homing connection, two optical splitters are connected to one OLT, one link exists between each optical splitter and the OLT, and two links exist between the two optical splitters and the OLT. In the PON dual-homing connection scenario, when the PON dual-homing connection is PON type B dual-homing, one optical splitter is connected to two OLTs separately, and two links exist between the optical splitter and the two OLTs. When the PON dual-homing connection is PON type C dual-homing, two optical splitters are respectively connected to their respective OLTs, and two links also exist between the two optical splitters and two OLTs.

When either of the two links between an optical splitter and an OLT described above fails, a communication system automatically switches from the failed link to another link between an optical splitter and an OLT. After the failed link is recovered, the communication system can automatically switch to the recovered failed link.

Refer to the PON type B single-homing connection in FIG. 4. A link 1 and a link 2 exist between an optical splitter and an OLT. When the link 1 fails, the communication system automatically switches from the link 1 to the link 2. After the link 1 is recovered, the communication system automatically switches from the link 2 to the link 1.

Based on the foregoing descriptions, in the PON network architecture, after a link fails, the link can be switched to another link. However, in the PON network architecture, data transmission is implemented based on a time division multiplexing (TDM) mechanism. In the TDM mechanism, signals sequentially transmitted in a same channel are distinguished in time. For example, based on the TDM mechanism, 1 second is divided into two 0.5 seconds, data A is not transmitted in the first 0.5 seconds, and the data A is transmitted in the second 0.5 seconds. The data A actually occupies only 0.5 seconds within the 1 second for data transmission.

An amount of transmitted data divided by transmission time is a bit rate. If a maximum broadband rate of a network is 2048 bit/s and a total amount of the data A is 1024 bits, theoretical transmission time required for the data A is 0.5 seconds, and a corresponding bit rate is 2048 bit/s. Actually, based on the TDM mechanism, the data A further needs to wait 0.5 seconds after occupying 0.5 seconds, and consequently, a bit rate corresponding to the data A is reduced to 1024 bit/s. To be specific, for the data A, theoretically, 2048 bits can be normally transmitted within 1 second, but due to a limitation of the TDM mechanism, only 1024 bits can be transmitted within 1 second currently, leading to a decrease in bandwidth.

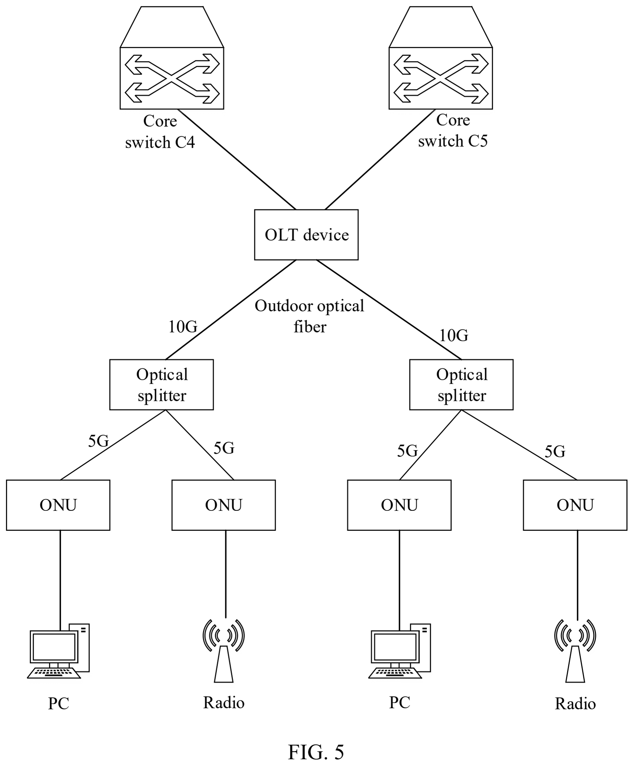

FIG. 5 is a schematic diagram of another PON network architecture in the related art. In FIG. 5, total bandwidth between an OLT device and an optical splitter is 10G, two ONUs are connected to the optical splitter, and bandwidth allocated to each ONU is 5G on average. In this case, all devices connected to each ONU share bandwidth of 5G. A larger quantity of ONUs connected to one optical splitter indicates lower bandwidth allocated to each ONU on average.

To sum up, based on the Ethernet passive aggregation network architecture in this embodiment of this application, a bandwidth convergence problem can be further resolved, to implement high-bandwidth data transmission.

An embodiment of this application further provides a link switching method. The method may be used to resolve a link switching problem in an Ethernet passive aggregation architecture. The method may be implemented by a first transmit end.

As shown in FIG. 3, both a TX transmit function and an RX receive function of a first transmit end are enabled, and a second transmit end is in a standby state, to be specific, a TX transmit function of the second transmit end is disabled, and an RX receive function of the second transmit end is enabled. Information is synchronized between the first transmit end and the second transmit end in real time. Therefore, the second transmit end can monitor information of the first transmit end in real time, and the first transmit end can obtain a message of the second transmit end in real time.

Based on the method provided in this embodiment of this application, the first transmit end determines a failure status of a first link, where the first link is a link between an optical splitter and the first transmit end. When it is determined that the first link fails, a failure status of a second link is determined, where the second link is a link between the optical splitter and the second transmit end. The failure status herein is mainly used to indicate whether the first link and the second link fail. When it is determined that the second link does not fail, the first link is switched to the second link for data transmission. The optical splitter is configured to receive a first optical signal sent by a transparent passive aggregation device, where the transparent passive aggregation device includes a multiplexer. The optical splitter splits the first optical signal into a first branch optical signal and a second branch optical signal, sends the first branch optical signal to the first transmit end, and sends the second branch optical signal to the second transmit end, where the first branch optical signal is used to detect the failure status of the first link, and the second branch optical signal is used to detect the failure status of the second link. The multiplexer is configured to receive a third optical signal sent by a first receive end and a fourth optical signal sent by a second receive end, couple the third optical signal and the fourth optical signal into a first optical signal, and send the first optical signal to the optical splitter.

In a possible implementation, the first transmit end may detect, based on a preset periodicity, an interval duration in which the first branch optical signal is not transmitted in the first link, and when the interval duration is greater than a preset duration, determine that the first link fails.

In a possible implementation, the first transmit end detects third optical power corresponding to the first branch optical signal in the first link, and determines whether the third optical power falls within a third preset optical power range. When the third optical power is beyond the third preset optical power range, it is determined that the first link fails.

In a possible implementation, the first transmit end detects, based on a preset periodicity, an interval duration in which the first branch optical signal is not transmitted in the first link, and determines whether the interval duration is greater than a preset duration. When the interval duration does not exceed the preset duration, the first transmit end determines that the first branch optical signal is received. The first transmit end further determines third optical power corresponding to the first branch optical signal, and determines whether the third optical power falls within a third preset optical power range. If the third optical power is beyond the third preset optical power range, it is determined that the first link fails.

When the first link fails, the first transmit end needs to ensure that switching is performed when the second link is in a normal state. The first transmit end obtains a status detection result of the second link from the second transmit end. When receiving a second branch optical signal sent by a receive end, the second transmit end determines second optical power corresponding to the second branch optical signal, and then determines whether the second optical power falls within a second preset optical power range. When the optical power falls within the second preset optical power range, it is determined that the detection result of the second link is normal. When the optical power is beyond the second preset optical power range, it is determined that the detection result of the second link is abnormal. It should be noted that the second transmit end may alternatively determine a status of the second link by detecting an interval duration in which the second branch optical signal is not transmitted in the second link. All obvious variations made by a person skilled in the art based on the foregoing manners fall within the protection scope of this application.

When determining, based on the detection result obtained from the second transmit end, that the second link is normal, the first transmit end switches from the first link to the second link. Specifically, the TX function of the first transmit end is disabled, the RX function of the first transmit end is enabled, and the TX function and the RX function of the second transmit end are enabled. In the foregoing method, a problem that data transmission efficiency is affected due to waiting for a failed link to recover can be resolved. After the first link is switched to the second link, full-power bandwidth may be further configured for the second link, to implement high-bandwidth data transmission in the Ethernet passive aggregation network architecture.

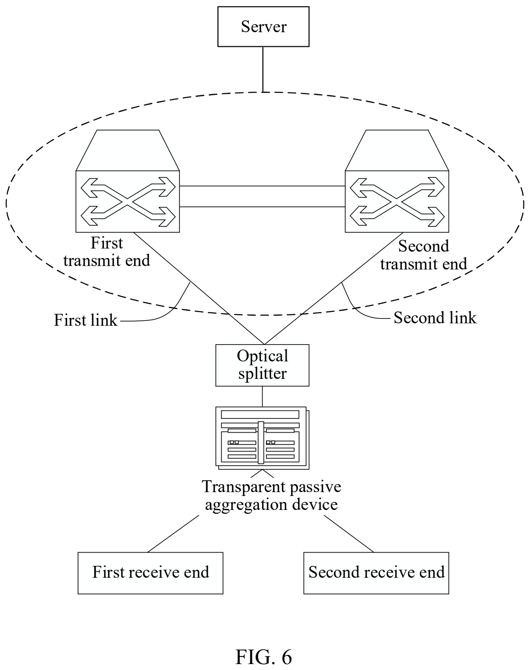

An embodiment of this application further provides a link switching method. The method may be used to resolve a link switching problem in an Ethernet passive aggregation architecture. The method may be implemented by a server corresponding to a first transmit end and a second transmit end. FIG. 6 is a schematic diagram of still another Ethernet passive aggregation network architecture according to this application. As shown in FIG. 6, a first transmit end and a second transmit end are managed by a server, a first link corresponding to the first transmit end is a primary link, and a second link corresponding to the second transmit end is a secondary link.

Based on the method provided in this embodiment of this application, the server determines a failure status of the first link, where the first link is a link between an optical splitter and the first transmit end. When it is determined that the first link fails, a failure status of the second link is determined, where the second link is a link between the optical splitter and the second transmit end. The failure status herein is mainly used to indicate whether the first link and the second link fail. When it is determined that the second link does not fail, data transmission is switched from the first link to the second link. The optical splitter is configured to receive a first optical signal sent by a transparent passive aggregation device, where the transparent passive aggregation device includes a multiplexer. The optical splitter splits the first optical signal into a first branch optical signal and a second branch optical signal, sends the first branch optical signal to the first transmit end, and sends the second branch optical signal to the second transmit end, where the first branch optical signal is used to detect the failure status of the first link, and the second branch optical signal is used to detect the failure status of the second link. The multiplexer is configured to receive a third optical signal sent by a first receive end and a fourth optical signal sent by a second receive end, couple the third optical signal and the fourth optical signal into a first optical signal, and send the first optical signal to the optical splitter.

In a possible implementation, to determine the failure status of the first link, the server may directly obtain an interval duration in which the first branch optical signal is not transmitted in the first link. The interval duration exceeding a preset duration indicates that the server does not detect the first branch optical signal in the first link, and it is determined that the first link fails.

In a possible implementation, the server may directly obtain third optical power corresponding to the first branch optical signal in the first link. When the third optical power is beyond a third preset optical power range, it is determined that the first link fails. The third optical power being greater than maximum optical power within the third preset optical power range indicates that strength of the first branch optical signal is excessively strong, and consequently, a service duration of an optical module is shortened. The third optical power being less than minimum optical power within the third preset optical power range indicates that strength of the first branch optical signal is excessively weak, and there is a risk that a communication service is to be blocked.

In a possible implementation, the server may obtain an interval duration in which the first branch optical signal is not transmitted in the first link. When determining that the interval duration does not exceed a preset duration, the server further obtains third optical power corresponding to the first branch optical signal. When the third optical power is beyond a third preset optical power range, it is determined that the first link fails.

Because a TX function of the second transmit end is disabled and an RX function of the second transmit end is enabled, the second transmit end may receive the second branch optical signal sent by a receive end. The second transmit end determines second optical power corresponding to the second branch optical signal, and detects whether the second optical power falls within a second preset optical power range. If the second optical power falls within the second preset optical power range, it is determined that the second link is normal. If the second optical power is beyond the second preset optical power range, it is determined that the second link is abnormal. It should be noted that the second transmit end may alternatively determine a status of the second link by detecting an interval duration in which the second branch optical signal is not transmitted in the second link. All obvious variations made by a person skilled in the art based on the foregoing manners fall within the protection scope of this application.

When determining that the first link fails and the second link is normal, the server switches from the first link to the second link. Specifically, a TX function of the first transmit end is disabled, an RX function of the first transmit end is enabled, and the TX function and the RX function of the second transmit end are enabled, to resolve a problem that data transmission efficiency is affected due to waiting for a failed link to recover.

In a possible implementation, after the first link is switched to the second link, the server configures full-power bandwidth for the second link, to implement high-bandwidth data transmission in the Ethernet passive aggregation network architecture.

Based on the foregoing method, the second link is deployed as a secondary link in the Ethernet passive aggregation network architecture. When the first link (primary link) fails, the first link is switched to the second link. This resolves a problem in the related art that, when a link in the Ethernet passive aggregation network architecture fails, data transmission efficiency is affected due to a need to wait for the failed link to recover.

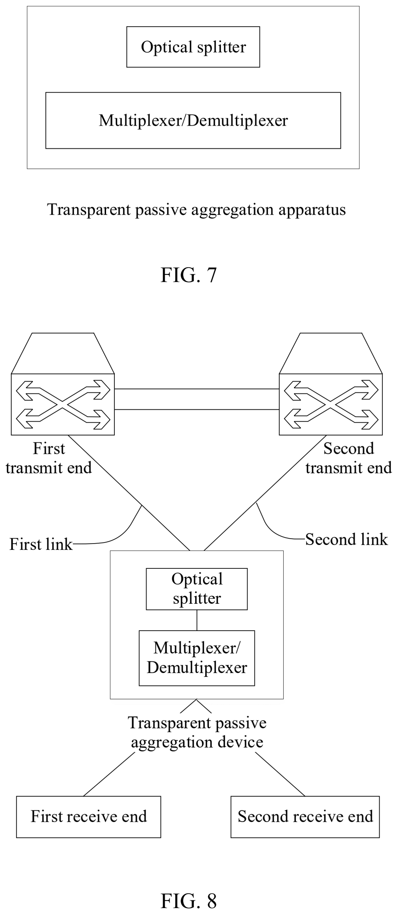

In a possible implementation, an optical splitter may be integrated in a transparent passive aggregation apparatus. FIG. 7 is a schematic diagram of a transparent passive aggregation apparatus according to this application. As shown in FIG. 7, in the transparent passive aggregation apparatus, an optical splitter is connected to a multiplexer/demultiplexer.

A transparent passive aggregation device includes the multiplexer and the optical splitter, and the multiplexer is connected to the optical splitter. The multiplexer receives a third optical signal sent by a first receive end and a fourth optical signal sent by a second receive end, couples the third optical signals and the fourth optical signal into a first optical signal, and sends the first optical signal to the optical splitter. After receiving the first optical signal, the optical splitter splits the first optical signal into a first branch optical signal and a second branch optical signal, sends the first branch optical signal to a first transmit end, and sends the second branch optical signal to a second transmit end.

It should be noted that a link between the first transmit end and the transparent passive aggregation device is referred to as a first link, and a link between the second transmit end and the transparent passive aggregation device is referred to as a second link. When the first link fails and the second link is normal, data transmission is switched from the first link to the second link. In this case, a TX function of the first transmit end is disabled, an RX function of the first transmit end is enabled, and a TX function and an RX function of the second transmit end are enabled. The second transmit end sends a fifth optical signal, and the optical splitter receives the fifth optical signal sent by the second transmit end.

The transparent passive aggregation device further includes the demultiplexer. After the first link is switched to the second link, the second transmit end transmits the fifth optical signal to the optical splitter, and the optical splitter sends the fifth optical signal to the demultiplexer. After receiving the fifth optical signal, the demultiplexer decouples the fifth optical signal into a sixth optical signal and a seventh optical signal, sends the sixth optical signal to the first receive end, and sends the seventh optical signal to the second receive end.

Based on the foregoing descriptions of the transparent passive aggregation apparatus, the optical splitter is integrated in the transparent passive aggregation apparatus to form the first link and the second link. In this way, when the first link fails, the first link can be switched to the second link, to resolve a problem that data transmission efficiency is affected due to waiting for a failed link to recover.

In a possible implementation, the demultiplexer is further disposed in the transparent passive aggregation device. The optical splitter sends the fifth optical signal to the demultiplexer. The demultiplexer receives the fifth optical signal, decouples the fifth optical signal into the sixth optical signal and the seventh optical signal, sends the sixth optical signal to the first receive end, and sends the seventh optical signal to the second receive end.

This application further provides a link switching system. FIG. 8 is a schematic diagram of a link switching system according to this application. As shown in FIG. 8, the link switching system includes a transparent passive aggregation device, a first transmit end, a second transmit end, a first receive end, and a second receive end. An optical splitter and a multiplexer are disposed in the transparent passive aggregation device. The first transmit end and the second transmit end are separately connected to the optical splitter in the transparent passive aggregation device. The first receive end and the second receive end are separately connected to the multiplexer in the transparent passive aggregation device.

The multiplexer in the transparent passive aggregation device receives a third optical signal transmitted by the first receive end, receives a fourth optical signal transmitted by the second receive end, and couples the third optical signal and the fourth optical signal into a first optical signal. The optical splitter in the transparent passive aggregation device splits the first optical signal into a first branch optical signal and a second branch optical signal, and then sends the first branch optical signal to the first transmit end and sends the second branch optical signal to the second transmit end, so that the first transmit end receives the first branch optical signal, and the second transmit end receives the second branch optical signal.

In a possible implementation, the first transmit end is further configured to control the first link to switch to the second link for data transmission when it is determined that the first link fails and the second link does not fail.

In a possible implementation, the first transmit end is configured to determine a status of the first link, and when an interval duration in which the first branch optical signal is not transmitted in the first link exceeds a preset duration, determine that the first link fails. In a possible implementation, when a detection result indicates that third optical power corresponding to the first branch optical signal transmitted in the first link is beyond a third preset optical power range, it is determined that the first link fails. In a possible implementation, when an interval duration in which the first branch optical signal is not transmitted in the first link does not exceed a preset duration, whether third optical power corresponding to the first branch optical signal falls within a first preset optical power range is further detected, and when the third optical power corresponding to the first branch optical signal is beyond the third preset optical power range, it is determined that the first link fails.

To successfully complete link switching when the first link fails and the second link is normal, the first transmit end further needs to obtain a detection result, detected by the second transmit end, of the second branch optical signal. The second transmit end determines second optical power corresponding to the second branch optical signal. When the second optical power falls within a second preset optical power range, it is determined that the second link is normal. When the optical power is beyond the second preset optical power range, it is determined that the second link is abnormal. The first transmit end can directly obtain, from the second transmit end, a detection result indicating that the second link is normal or abnormal.

When determining that the first link fails and the second link is normal, the first transmit end switches from the first link to the second link, to resolve a problem that data transmission efficiency is affected due to a need to wait for a failed link to recover.

In a possible implementation, before controlling the first link to switch to the second link for data transmission, the first transmit end is configured to enable a transmit function and a receive function, and the second transmit end is configured to disable a transmit function and enable a receive function.

In a possible implementation, when it is determined that the first link fails and the second link is normal, the first transmit end is configured to disable a transmit function and enable a receive function, and the second transmit end is configured to enable a transmit function and a receive function, to switch from the first link to the second link.

In a possible implementation, when the first link is switched to the second link for data transmission, the second transmit end sends a fifth optical signal, and the optical splitter in the transparent passive aggregation device receives the fifth optical signal sent by the second transmit end.

In a possible implementation, a demultiplexer is further disposed in the transparent passive aggregation device. The optical splitter sends the fifth optical signal to the demultiplexer. The demultiplexer receives the fifth optical signal, decouples the fifth optical signal into a sixth optical signal and a seventh optical signal, sends the sixth optical signal to the first receive end, and sends the seventh optical signal to the second receive end.

It should be noted that the transparent passive aggregation device provided with the optical splitter in the link switching system may be split into an independent optical splitter and an independent multiplexing/demultiplexing device for operation.

Based on the foregoing descriptions, when it is determined that the first link fails and the second link is normal, data transmission is switched from the first link to the second link, and the optical splitter is integrated in the transparent passive aggregation device, to resolve a problem that data transmission efficiency is affected due to waiting for a failed link to recover.

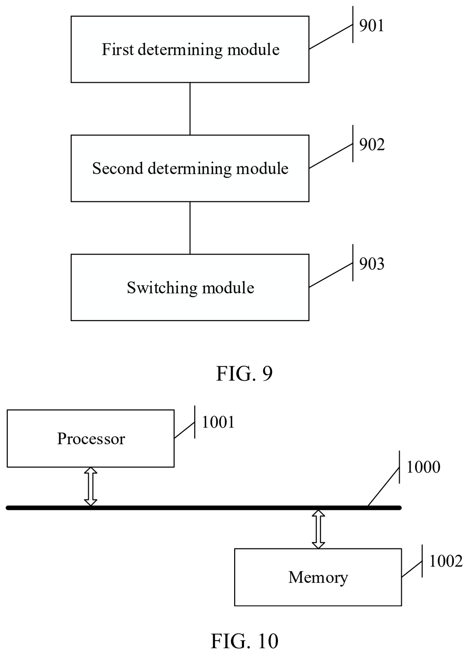

Based on the same inventive concept, an embodiment of this application further provides a link switching apparatus. The link switching apparatus is configured to implement functions of a link switching method. As shown in FIG. 9, the apparatus includes:
a first determining module 901, configured to determine a failure status of a first link, where the first link is a link between an optical splitter and a first transmit end;
a second determining module 902, configured to determine whether a second link fails when it is determined that the first link fails, where the second link is a link between the optical splitter and a second transmit end; and
a switching module 903, configured to switch from the first link to the second link for data transmission when it is determined that the second link does not fail.

The optical splitter is configured to receive a first optical signal sent by a multiplexer, split the first optical signal into a first branch optical signal and a second branch optical signal, send the first branch optical signal to the first transmit end, and send the second branch optical signal to the second transmit end, where the first branch optical signal is used to detect the failure status of the first link, and the second branch optical signal is used to detect the failure status of the second link. The multiplexer is configured to receive a third optical signal sent by a first receive end and a fourth optical signal sent by a second receive end, couple the third optical signal and the fourth optical signal into the first optical signal, and send the first optical signal to the optical splitter.

In a possible implementation, the first determining module 901 is configured to obtain an interval duration in which the first branch optical signal is not transmitted in the first link, and determine that the first link fails when the interval duration exceeds a preset duration.

In a possible design, the first determining module 901 is configured to obtain third optical power corresponding to the first branch optical signal transmitted by the first link, and determine that the first link fails when the third optical power is beyond a third preset optical power range.

In a possible design, the first determining module 901 is configured to: detect an interval duration in which the first branch optical signal is not transmitted in the first link; when the interval duration does not exceed a preset duration, obtain third optical power corresponding to the first branch optical signal transmitted by the first link; and when the third optical power is beyond a third preset optical power range, determine that the first link fails.

In a possible design, the second determining module 902 is configured to obtain a failure status, detected by the second transmit end, of the second link.

In a possible design, the switching module 903 is configured to control a transmit function of the first transmit end to be disabled and a receive function of the first transmit end to be enabled, and control a transmit function of the second transmit end and a receive function of the second transmit end to be enabled.

In a possible design, the first determining module 901 is further configured to: before determining whether the first link fails, control a transmit function of the first transmit end and a receive function of the first transmit end to be enabled, and control a transmit function of the second transmit end to be disabled and a receive function of the second transmit end to be enabled.

Based on the same inventive concept, an embodiment of this application provides a communication device. The communication device may be a transparent passive aggregation apparatus. As shown in FIG. 7, the transparent passive aggregation apparatus includes a multiplexer and an optical splitter, and the optical splitter is connected to the multiplexer.

The multiplexer is configured to receive a third optical signal sent by a first receive end and a fourth optical signal sent by a second receive end, couple the third optical signal and the fourth optical signal into a first optical signal, and send the first optical signal to the optical splitter.

The optical splitter is configured to receive the first optical signal, split the first optical signal into a first branch optical signal and a second branch optical signal, send the first branch optical signal to a first transmit end, and send the second branch optical signal to a second transmit end, where a link between the first transmit end and the optical splitter is a first link, a link between the second transmit end and the optical splitter is a second link, the first branch optical signal is used to detect a failure status of the first link, and the second branch optical signal is used to detect a failure status of the second link.

The optical splitter is further configured to: when the first link is switched to the second link for data transmission based on the failure status of the first link and the failure status of the second link, receive a fifth optical signal sent by the second transmit end.

In a possible design, the communication device further includes a demultiplexer.

The optical splitter is configured to send the fifth optical signal to the demultiplexer.

The demultiplexer is configured to receive the fifth optical signal, decouple the fifth optical signal into a sixth optical signal and a seventh optical signal, send the sixth optical signal to the first receive end, and send the seventh optical signal to the second receive end.

Based on the same inventive concept, this application provides a link switching system. The link switching system may implement the functions of the foregoing link switching method. As shown in FIG. 8, the system includes a communication device, a first transmit end, a second transmit end, a first receive end, and a second receive end. The communication device may be a transparent passive aggregation apparatus. The transparent passive aggregation device includes an optical splitter and a multiplexer.

The first receive end is configured to send a third optical signal to the multiplexer in the transparent passive aggregation device.

The second receive end is configured to send a fourth optical signal to the multiplexer in the transparent passive aggregation device.

The multiplexer in the transparent passive aggregation device is configured to receive the third optical signal and the fourth optical signal, and couple the third optical signal and the fourth optical signal into a first optical signal.

The optical splitter in the transparent passive aggregation device is configured to split the first optical signal into a first branch optical signal and a second branch optical signal, send the first branch optical signal to the first transmit end, and send the second branch optical signal to the second transmit end, where a link between the first transmit end and the optical splitter is a first link, and a link between the second transmit end and the optical splitter is a second link.

The first transmit end is configured to: receive the first branch optical signal, where the first branch optical signal is used to detect a failure status of the first link; and when it is determined that the first link fails and the second link does not fail, control the first link to switch to the second link for data transmission.

The second transmit end is configured to: receive the second branch optical signal, where the second branch optical signal is used to detect a failure status of the second link; and when the first link is switched to the second link for data transmission, send a fifth optical signal.

In a possible implementation, a demultiplexer is further disposed in the transparent passive aggregation device. When the first link is switched to the second link for data transmission, the optical splitter in the communication device is further configured to receive the fifth optical signal sent by the second transmit end, and send the fifth optical signal to the demultiplexer. The demultiplexer is configured to receive the fifth optical signal, decouple the fifth optical signal into a sixth optical signal and a seventh optical signal, send the sixth optical signal to the first receive end, and send the seventh optical signal to the second receive end.

This application provides a link switching system. The link switching system may implement the functions of the foregoing link switching method. As shown in FIG. 6, the system further includes an optical splitter, a transparent passive aggregation device, a first transmit end, a second transmit end, a first receive end, and a second receive end. The transparent passive aggregation device may include a multiplexer.

The first receive end is configured to send a third optical signal to the transparent passive aggregation device.

The second receive end is configured to send a fourth optical signal to the transparent passive aggregation device.

The transparent passive aggregation device is configured to receive the third optical signal and the fourth optical signal, couple the third optical signal and the fourth optical signal into a first optical signal, and send the first optical signal to the optical splitter.

The optical splitter is configured to receive the first optical signal, split the first optical signal into a first branch optical signal and a second branch optical signal, send the first branch optical signal to the first transmit end, and send the second branch optical signal to the second transmit end, where a link between the firs transmit end and the optical splitter is a first link, and a link between the second transmit end and the optical splitter is a second link.

The first transmit end is configured to: receive the first branch optical signal, where the first branch optical signal is used to detect a failure status of the first link; and when it is determined that the first link fails and the second link does not fail, control the first link to switch to the second link for data transmission.

The second transmit end is configured to: receive the second branch optical signal, where the second branch optical signal is used to detect a failure status of the second link; and when the first link is switched to the second link for data transmission, send a fifth optical signal.

In a possible implementation, a demultiplexer is further disposed in the transparent passive aggregation device. When the first link is switched to the second link for data transmission, the optical splitter is further configured to receive the fifth optical signal sent by the second transmit end, and send the fifth optical signal to the demultiplexer. The demultiplexer is configured to receive the fifth optical signal, decouple the fifth optical signal into a sixth optical signal and a seventh optical signal, send the sixth optical signal to the first receive end, and send the seventh optical signal to the second receive end.

Based on the same inventive concept, an embodiment of this application further provides an electronic device. The electronic device may implement the functions of the foregoing link switching apparatus. As shown in FIG. 10, the electronic device includes:
at least one processor 1001 and a memory 1002 connected to the at least one processor 1001. A specific connection medium between the processor 1001 and the memory 1002 is not limited in this embodiment of this application. In FIG. 10, for example, the processor 1001 and the memory 1002 are connected through a bus 1000. The bus 1000 is represented by a bold line in FIG. 10. A connection manner between other components is described merely as an example and does not constitute a limitation. The bus 1000 may be classified into an address bus, a data bus, a control bus, and the like. For ease of representation, only one bold line is used to represent the bus in FIG. 10, but this does not mean that there is only one bus or only one type of bus. Alternatively, the processor 1001 may also be referred to as a controller, without a limitation on the name.

In this embodiment of this application, the memory 1002 stores instructions that can be executed by the at least one processor 1001, and the at least one processor 1001 may perform the foregoing link switching method by executing the instructions stored in the memory 1002. The processor 1001 may implement the functions of the modules in the apparatus shown in FIG. 9.

The processor 1001 is a control center of the apparatus, and may connect all parts of the entire control device through various interfaces and lines, and implement various functions and data processing of the apparatus by running or executing the instructions stored in the memory 1002 and invoking data stored in the memory 1002, to perform overall monitoring on the apparatus.

In a possible design, the processor 1001 may include one or more processing units. The processor 1001 may integrate an application processor and a modem processor. The application processor mainly processes an operating system, a user interface, an application, and the like. The modem processor mainly processes wireless communication. It can be understood that the modem processor may alternatively not be integrated in the processor 1001. In some embodiments, the processor 1001 and the memory 1002 may be implemented on one chip. In some embodiments, the processor 1001 and the memory 1002 may alternatively be implemented separately on separate chips.

The processor 1001 may be a general-purpose processor, for example, a central processing unit (CPU), a digital signal processor, an application-specific integrated circuit, a field programmable gate array or another programmable logic device, a discrete gate or a transistor logic device, or a discrete hardware component, and may implement or perform the methods, steps, and logical block diagrams disclosed in the embodiments of this application. The general-purpose processor may be a microprocessor or any conventional processor or the like. The steps of the link switching method disclosed with reference to the embodiments of this application may be directly performed and completed by using a hardware processor, or may be performed and completed by using a combination of a hardware module and a software module in the processor.

As a non-volatile computer-readable storage medium, the memory 1002 may be configured to store non-volatile software programs, non-volatile computer-executable programs, and modules. The memory 1002 may include at least one type of storage medium, for example, may include a flash memory, a hard disk, a multimedia card, a memory card, a random access memory (RAM), a static random access memory (SRAM), a programmable read-only memory (PROM), a read-only memory (ROM), an electrically erasable programmable read-only memory (EEPROM), a magnetic memory, a magnetic disk, or an optical disc. The memory 1002 is any other medium that can be used to carry or store desired program code in a form of an instruction or a data structure and that can be accessed by a computer, but is not limited thereto. The memory 1002 in this embodiment of this application may alternatively be a circuit or any other apparatus that can implement a storage function, and is configured to store program instructions and/or data.

Code corresponding to the link switching method described in the foregoing embodiments may be incorporated into a chip by designing and programming the processor 1001, so that the link switching steps in the embodiment shown in FIG. 4 can be performed when the chip runs. How to design and program the processor 1001 is a technology well known by a person skilled in the art. Details are not described herein.

Based on the same inventive concept, an embodiment of this application further provides a storage medium. The storage medium stores computer instructions. When the computer instructions are run on a computer, the computer is enabled to perform the foregoing link switching method.

In some possible implementations, various aspects of the link switching method provided in this application may be further implemented in a form of a program product, which includes program code. When the program product is run on an apparatus, the program code is used to enable the control device to perform the steps of the foregoing link switching method according to various exemplary implementations of this application described in this specification.

A person skilled in the art should understand that the embodiments of this application may be provided as a method, a system, or a computer program product. Therefore, this application may be implemented in a form of a hardware-only embodiment, a software-only embodiment, or an embodiment with a combination of software and hardware. In addition, this application may be implemented in a form of a computer program product that is implemented on one or more computer-usable storage media (including but not limited to a disk memory, a CD-ROM, an optical memory, and the like) that include computer-usable program code.

This application is described with reference to the flowcharts and/or the block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the other programmable data processing device generate an apparatus for implementing a specific function in one or more procedures in the flowcharts and/or in one or more blocks in the block diagrams.

These computer program instructions may alternatively be stored in a computer-readable memory that can instruct a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

Alternatively, these computer program instructions may be loaded onto a computer or another programmable data processing device, so that a series of operations and steps are performed on the computer or the another programmable device, to generate computer-implemented processing. Therefore, the instructions executed on the computer or the other programmable device provide steps for implementing a specific function in one or more procedures in the flowcharts and/or in one or more blocks in the block diagrams.

Clearly, a person skilled in the art may make various modifications and variations to this application without departing from the spirit and scope of this application. Therefore, this application is intended to cover these modifications and variations of this application provided that they fall within the scope of the claims of this application and equivalent technologies thereof.

## Claims

1. A link switching method, comprising:
determining a failure status of a first link, wherein the first link is a link between an optical splitter and a first transmit end;
when it is determined that the first link fails, determining a failure status of a second link, wherein the second link is a link between the optical splitter and a second transmit end; and
when it is determined that the second link does not fail, switching from the first link to the second link for data transmission, wherein
the optical splitter is configured to receive a first optical signal sent by a multiplexer, split the first optical signal into a first branch optical signal and a second branch optical signal, send the first branch optical signal to the first transmit end, and send the second branch optical signal to the second transmit end, wherein the first branch optical signal is used to detect the failure status of the first link, and the second branch optical signal is used to detect the failure status of the second link.

2. The method according to claim 1, wherein the determining the failure status of the first link comprises:
obtaining an interval duration in which the first branch optical signal is not transmitted in the first link, and when the interval duration exceeds a preset duration, determining that the first link fails.

3. The method according to claim 1, wherein the determining the failure status of the first link comprises:
obtaining third optical power corresponding to the first branch optical signal transmitted by the first link, and when the third optical power is beyond a third preset optical power range, determining that the first link fails.

4. The method according to claim 1, wherein the determining the failure status of the first link comprises:
obtaining an interval duration in which the first branch optical signal is not transmitted in the first link;
when the interval duration does not exceed a preset duration, obtaining third optical power corresponding to the first branch optical signal transmitted by the first link; and
when the third optical power is beyond a third preset optical power range, determining that the first link fails.

5. The method according to any one of claims 1 to 4, wherein before the determining the failure status of the first link, the method further comprises:
controlling a transmit function of the first transmit end and a receive function of the first transmit end to be enabled, and controlling a transmit function of the second transmit end to be disabled and a receive function of the second transmit end to be enabled.

6. The method according to any one of claims 1 to 4, wherein the determining whether the second link fails comprises:
obtaining a failure status, detected by the second transmit end, of the second link.

7. The method according to claim 6, wherein the switching from the first link to the second link for data transmission comprises:
controlling a transmit function of the first transmit end to be disabled and a receive function of the first transmit end to be enabled, and controlling a transmit function of the second transmit end and a receive function of the second transmit end to be enabled.

8. A link switching apparatus, comprising:
a first determining module, configured to determine a failure status of a first link, wherein the first link is a link between an optical splitter and a first transmit end;
a second determining module, configured to determine a failure status of a second link when it is determined that the first link fails, wherein the second link is a link between the optical splitter and a second transmit end; and
a switching module, configured to switch from the first link to the second link for data transmission when it is determined that the second link does not fail, wherein
the optical splitter is configured to receive a first optical signal sent by a multiplexer, split the first optical signal into a first branch optical signal and a second branch optical signal, send the first branch optical signal to the first transmit end, and send the second branch optical signal to the second transmit end, wherein the first branch optical signal is used to detect the failure status of the first link, and the second branch optical signal is used to detect the failure status of the second link.

9. A communication device, comprising:
a multiplexer, configured to receive a third optical signal sent by a first receive end and a fourth optical signal sent by a second receive end, couple the third optical signal and the fourth optical signal into a first optical signal, and send the first optical signal to an optical splitter; and
an optical splitter, configured to receive the first optical signal, split the first optical signal into a first branch optical signal and a second branch optical signal, send the first branch optical signal to a first transmit end, and send the second branch optical signal to a second transmit end, wherein a link between the first transmit end and the optical splitter is a first link, a link between the second transmit end and the optical splitter is a second link, the first branch optical signal is used to detect a failure status of the first link, and the second branch optical signal is used to detect a failure status of the second link, wherein
the optical splitter is further configured to: when the first link is switched to the second link for data transmission based on the failure status of the first link and the failure status of the second link, receive a fifth optical signal sent by the second transmit end.

10. The communication device according to claim 9, wherein the communication device further comprises a demultiplexer, wherein
the optical splitter is configured to send the fifth optical signal to the demultiplexer; and
the demultiplexer is configured to receive the fifth optical signal, decouple the fifth optical signal into a sixth optical signal and a seventh optical signal, send the sixth optical signal to the first receive end, and send the seventh optical signal to the second receive end.

11. A link switching system, comprising an optical splitter, a multiplexer, a first transmit end, a second transmit end, a first receive end, and a second receive end, wherein
the first receive end is configured to send a third optical signal to the multiplexer;
the second receive end is configured to send a fourth optical signal to the multiplexer;
the multiplexer is configured to receive the third optical signal and the fourth optical signal, couple the third optical signal and the fourth optical signal into a first optical signal, and send the first optical signal to the optical splitter;
the optical splitter is configured to receive the first optical signal, split the first optical signal into a first branch optical signal and a second branch optical signal, send the first branch optical signal to the first transmit end, and send the second branch optical signal to the second transmit end, wherein a link between the first transmit end and the optical splitter is a first link, and a link between the second transmit end and the optical splitter is a second link;
the first transmit end is configured to: receive the first branch optical signal, wherein the first branch optical signal is used to detect a failure status of the first link; and when it is determined that the first link fails and the second link does not fail, control the first link to switch to the second link for data transmission; and
the second transmit end is configured to receive the second branch optical signal, wherein the second branch optical signal is used to detect a failure status of the second link.

12. The system according to claim 11, further comprising a demultiplexer, wherein
the optical splitter is configured to: when the first link is switched to the second link for data transmission, receive a fifth optical signal sent by the second transmit end, and send the fifth optical signal to the demultiplexer; and
the demultiplexer is configured to receive the fifth optical signal, decouple the fifth optical signal into a sixth optical signal and a seventh optical signal, send the sixth optical signal to the first receive end, and send the seventh optical signal to the second receive end.

13. The system according to claim 11, wherein before controlling the first link to switch to the second link for data transmission, the first transmit end is configured to obtain an interval duration in which the first branch optical signal is not transmitted in the first link, and when the interval duration exceeds a preset duration, determine that the first link fails.

14. The system according to claim 11, wherein before controlling the first link to switch to the second link for data transmission, the first transmit end is configured to obtain third optical power corresponding to the first branch optical signal transmitted by the first link, and when the third optical power is beyond a third preset optical power range, determine that the first link fails.

15. The system according to claim 11, wherein before controlling the first link to switch to the second link for data transmission, the first transmit end is configured to: obtain an interval duration in which the first branch optical signal is not transmitted in the first link; when the interval duration does not exceed a preset duration, obtain third optical power corresponding to the first branch optical signal transmitted by the first link; and when the third optical power is beyond a third preset optical power range, determine that the first link fails.

16. The system according to any one of claims 11 to 15, wherein before controlling the first link to switch to the second link for data transmission, the first transmit end is configured to enable a transmit function and a receive function, and the second transmit end is configured to disable a transmit function and enable a receive function.

17. The system according to any one of claims 11 to 15, wherein before controlling the first link to switch to the second link for data transmission, the first transmit end is configured to obtain a failure status, detected by the second transmit end, of the second link.

18. The system according to claim 17, wherein when it is determined that the first link fails and the second link is normal, the first transmit end is configured to disable a transmit function and enable a receive function, and the second transmit end is configured to enable a transmit function and a receive function.

19. An electronic device, comprising:
a memory, configured to store a computer program; and
a processor, configured to execute the computer program stored in the memory, to implement the steps of the method according to any one of claims 1 to 7.

20. A computer-readable storage medium, wherein a computer program is stored in the computer-readable storage medium, and when the computer program is executed by a processor, the steps of the method according to any one of claims 1 to 7 are implemented.
